# EUROPÄISCHE PATENTANMELDUNG

(11) **EP 4 699 700 A1**
(43) Veröffentlichungstag der Anmeldung: **25.02.2026**
(21) Anmeldenummer: 24196308.1
(22) Anmeldetag: 23.08.2024
(51) Int. Cl.: B03B 5/00, B03B 9/06, B09B 3/30, B09B 101/35

(54) **AUFBEREITUNG VON ASBESTHALTIGEM SCHÜTTGUT**

(71) Anmelder: PMO ProjektManagement GmbH, 55268 Nieder-Olm (DE)
(72) Erfinder: Böhm, Uta Therese, 56271 Isenburg (DE); Herrmann, Bastian Ulrich, 67141 Neuhofen (DE); Oehm, Peter Matthias, 55268 Nieder-Olm (DE)
(74) Vertreter: Bosch Jehle Patentanwaltsgesellschaft mbH

(57) **Zusammenfassung**

Die Erfindung betrifft ein Verfahren zur Aufbereitung eines Schüttguts, das mineralische und asbesthaltige Bestandteile enthält. Das Verfahren weist dazu die folgenden Schritte auf: - Trocken- oder Nassklassieren des Schüttguts, um daraus mindestens eine Feinfraktion abzutrennen; - Nasssortieren der Feinfraktion, um diese in einen asbestfreien mineralischen Teil und einen asbesthaltigen Teil zu trennen, wobei der Schritt des Nasssortierens der Feinfraktion umfasst, dass die Feinfraktion in eine Flüssigkeit gegeben wird, in der mehrere sich überlagernde Strömungen erzeugt werden, oder die Feinfraktion mit mindestens einem Flüssigkeitsstrom beaufschlagt und zusätzlich durch eine von außen auf die Feinfraktion wirkende Kraft beschleunigt wird, um mineralische und asbesthaltige Bestandteile der Feinfraktion der Dichte nach zu trennen, und so den asbestfreien mineralischen Teil und den asbesthaltigen Teil aus der Feinfraktion zu erhalten. Ein weiterer Aspekt der Erfindung betrifft Systeme zur Aufbereitung eines Schüttguts, das mineralische und asbesthaltige Bestandteile enthält.

## Beschreibung

Die Erfindung betrifft ein Verfahren und ein System zur Aufbereitung von Schüttgut, das mineralische und asbesthaltige Bestandteile enthält.

Im 20. Jahrhundert war Asbest aufgrund seiner besonderen Eigenschaften (hohe Festigkeit, hohe Hitze- und Säurebeständigkeit sowie hervorragende Wärmedämmung) ein beliebter Baustoff und wurde vielseitig eingesetzt. Asbesthaltige Baumaterialien wie Asbestzement waren weit verbreitet. Für Asbestzement wurden Asbestfasern mit Zement gemischt, um z.B. Asbestzementplatten, -rohre, -schindeln und -wellplatten herzustellen. Asbest kam aber auch in Putz, Spachtelmasse und Fliesenkleber zum Einsatz. In der Betonindustrie wurden insbesondere asbesthaltige Abstandshalter (aus Faserzement) verwendet. Sie hatten die Funktion, den Abstand zwischen den Bewehrungsstäben (Stahlstäben) im Beton und der Schalung zu gewährleisten.

Wegen der erheblichen Gesundheitsgefahr wurde die Verwendung von Asbest stark eingeschränkt. Am 1. November 1993 kam es in Deutschland schließlich zu einem Erlass eines Herstellungs- und Verwendungsverbot für Asbest. Jegliches asbesthaltige Material muss zudem sach- und fachgerecht auf einer Deponie beseitigt werden. Die genauen Vorgehensweisen und Bestimmungen zur Asbestentsorgung unterliegen strengen Auflagen und können je nach Land oder Region unterschiedlich sein. Bei Bauwerkssanierungen oder -abriss werden asbesthaltige Materialien in der Regel vor Ort in einem sog. Schwarzbereich staubdicht (in sogenannten "Big Bags") verpackt, die Verpackungsmaterialien faserfrei gemacht und auf einer Deponie eingelagert.

Durch die Verwendung als Baustoff ist Asbest zudem in den Boden gelangt. Der Abbruch und die Sanierung asbesthaltiger Altbauten sowie die Deponierung von asbesthaltigen Materialien führen typischerweise zur Bodenkontamination. Auch die Verwendung von asbesthaltigem Bauschutt als Füllmaterial und Emissionen aus Industriebetrieben, die Asbest verarbeiten, tragen dazu bei. In einigen Regionen der Erde kommt Asbest natürlicherweise im Gestein vor und kann durch Erosion in den Boden gelangen. In den genannten Fällen werden die betroffenen Erdschichten abgetragen, entsprechend verpackt und deponiert.

Eine Verwertung bzw. Aufbereitung von asbesthaltigem Material ist bisher nicht vorgesehen.

Der Erfindung liegt daher die technische Aufgabe zugrunde, eine Aufbereitung von asbesthaltigem Schüttgut bereitzustellen, die eine effiziente Trennung von asbesthaltigem und nicht-asbesthaltigem Material ermöglicht.

Diese Aufgabe wird durch das erfindungsgemäße Verfahren gemäß Anspruch 1 und das erfindungsgemäße System gemäß Anspruch 14 gelöst. Vorteilhafte Ausgestaltungen der vorliegenden Erfindung sind in den Unteransprüchen 2 bis 13 und 15 angegeben.

Die Erfindung betrifft ein Verfahren zur Aufbereitung eines Schüttguts, das mineralische und asbesthaltige Bestandteile enthält, wobei das Verfahren die folgenden Schritte aufweist:
- Trocken- oder Nassklassieren des Schüttguts, um daraus mindestens eine Feinfraktion abzutrennen;
- Nasssortieren der Feinfraktion, um diese in einen asbestfreien mineralischen Teil und einen asbesthaltigen Teil zu trennen,
   wobei der Schritt des Nasssortierens der Feinfraktion umfasst, dass:
   - die Feinfraktion in eine Flüssigkeit gegeben wird, in der mehrere sich überlagernde Strömungen erzeugt werden; oder
   - die Feinfraktion mit mindestens einem Flüssigkeitsstrom beaufschlagt und zusätzlich durch eine von außen auf die Feinfraktion wirkende Kraft beschleunigt wird, um mineralische und asbesthaltige Bestandteile der Feinfraktion der Dichte nach zu trennen, und so den asbestfreien mineralischen Teil und den asbesthaltigen Teil aus der Feinfraktion zu erhalten.

Im Sinne der Erfindung wird als Schüttgut beispielsweise asbesthaltiger Boden angesehen. Ein solcher Boden umfasst Mutterboden, Sand, Kies, Lehm, Ton, Schluff, Steine und/oder Fels. Meist durch anthropogene Einflüsse - z.B. durch die Verwendung von asbesthaltigem Bauschutt zur Befestigung von Wegen, Einfassungen oder zur Auffüllung von Baugruben - kommt es zur Kontamination des Bodens mit Asbest. Darüber hinaus kann es sich bei Schüttgut auch um mineralische Bauschuttgemische oder auf Bodengröße zerkleinerten Bauschutt handeln, die einen Asbestanteil haben. Unter Bauschutt sind mineralische Stoffe aus Bautätigkeiten zu verstehen, d.h. Stoffe, die z.B. Beton, Kalksandstein, Zement und/oder Ziegel enthalten. Denkbar ist auch ein asbesthaltiges Gemisch aus einem Boden (z.B. Bodenaushub) und Bauschutt, wie typischerweise Material aus Altlastensanierungen.

Das Schüttgut liegt vorzugsweise in Bruchstücken mit einer Kantenlänge von maximal 400 mm vor. Ferner ist es zweckmäßig, wenn die Kantenlänge der Bruchstücke überwiegend unter einer Korngröße von 2 mm liegt. Bruchstücke mit einer Kantenlänge von mehr als 400 mm werden bevorzugt (vorbereitend) aussortiert. Dies ist von Vorteil, da das Schüttgut mit Bruchstücken bis 400 mm leicht mit einem Radlader und/oder Förderband transportiert werden kann.

Erfindungsgemäß wird im ersten Verfahrensschritt das Schüttgut trocken- oder nassklassiert. Beim Klassieren handelt es sich um eine mechanische Größentrennung von schüttfähigem Aufgabegut (das Schüttgut). In Abhängigkeit der geltenden Umweltauflagen kann das Klassieren ohne den Einsatz einer Flüssigkeit (Trockenklassieren) oder befeuchtet (Nassklassieren), bevorzugt mit Wasser, erfolgen. Beim Trockenklassieren kommt ein Klassiergerät (z.B. eine Siebmaschine) zum Einsatz, das gemäß gewünschter Trennkriterien, z.B. in Abhängigkeit von der Anzahl der Siebebenen und der Wahl der Siebmaschenweite bzw. Lochgröße, das Aufgabegut der Korngröße nach in mindestens eine Feinfraktion mit kleiner Korngröße und optional in eine Mittelfraktion mit mittlerer Korngröße und/oder eine Grobfraktion mit großer Korngröße auftrennt (worauf später noch näher eingegangen wird). Beim Nassklassieren wird das Aufgabegut unter Zugabe von Flüssigkeit, z.B. in einer Siebmaschine, nach der Korngröße getrennt.

Bei der Feinfraktion handelt es sich beispielsweise um (asbesthaltige) Betonsande, Stäube und/oder Boden. Die Feinfraktion weist vorzugsweise eine Korngröße von weniger als 5 mm, besonders bevorzugt weniger als 2 mm auf.

Erfindungsgemäß erfolgt in einem zweiten Verfahrensschritt das Nasssortieren der abgetrennten Feinfraktion. Dabei werden die Bestandteile des Schüttguts mit feiner Korngröße in eine Flüssigkeit mit sich überlagernden Strömungen gegeben Die Erzeugung der Strömungen kann bereits während der Zugabe der Feinfraktion oder erst nach der Zugabe der Feinfraktion erfolgen.

Bei den sich überlagernden Strömungen handelt es sich insbesondere um unterschiedlich orientierte Strömungen, d.h. sie weisen zueinander unterschiedliche Strömungsrichtungen (Fluidflussrichtungen) auf. Sie können auch turbulente Strömungen und/oder Rotationsströmungen sein.

Aufgrund der unterschiedlichen Dichten der Bestandteile in der Feinfraktion haben diese unterschiedliche Absinkgeschwindigkeiten bzw. nehmen diese unterschiedliche Bewegungsbahnen in der Flüssigkeit ein. Durch eine geeignete Wahl der erzeugten Strömungen lässt sich zudem erreichen, dass die Bestandteile der Feinfraktion der Dichte nach einzelnen Strömungen folgen bzw. sich in bestimmte Strömungsrichtungen bewegen. Dies ermöglicht es, selbst kleinste Bestandteile (mit einer Korngröße < 2 mm) unterschiedlicher Dichte voneinander räumlich zu trennen. Im Ergebnis erhält man so eine Fraktionierung in eine asbestfreie mineralische Fraktion und eine asbesthaltige (mineralische) Fraktion. Je nach Zusammensetzung des Schüttguts stellt die asbestfreie mineralische Fraktion die Leichtfraktion (Bestandteile mit niedriger Dichte) und die asbesthaltige Fraktion die Schwerfraktion (Bestandteile mit hoher Dichte) oder umgekehrt dar. Bei Material mit kleiner Korngröße und daher kleiner Oberfläche lässt sich der beschriebene Trennerfolg mit einer einfachen aufwärtsgerichteten Strömung (z.B. beim Hub-Senk-Verfahren) nicht erzielen.

Alternativ wird im zweiten Verfahrensschritt die Feinfraktion mit mindestens einem Flüssigkeitsstrom beaufschlagt. Dabei kommt die Feinfraktion mit der strömenden Flüssigkeit in Kontakt. Die Bestandteile der Feinfraktion folgen dieser strömenden Flüssigkeit. Aufgrund der unterschiedlichen Absinkgeschwindigkeiten schwimmen die Bestandteile der Feinfraktion mit geringer Dichte (Leichtfraktion) länger mit dem Flüssigkeitsstrom als die Bestandteile mit hoher Dichte (Schwerfraktion). Zusätzlich erfährt die Feinfraktion eine Krafteinwirkung und wird dadurch beschleunigt, so dass sich die Bestandteile der Feinfraktion entlang der resultierenden Kraftrichtung bewegen. Aufgrund der Massenträgheit bewegen sich die Bestandteile der Feinfraktion mit hoher Dichte (Schwerfraktion) länger in der Flüssigkeit als die Bestandteile mit geringer Dichte (Leichtfraktion). Die Krafteinwirkung auf die Feinfraktion ist vorzugsweise stoßartig und wiederholend. Sie erfolgt vorzugsweise in Form von periodischen Kraftstößen. Dadurch wird eine räumliche Trennung von Bestandteilen der Feinfraktion mit unterschiedlicher Dichte erreicht. Die Überlagerung einer Flüssigkeitsströmung, in der sich die Feinfraktion befindet, und einer auf die Feinfraktion wirkenden Kraft macht man sich z.B. bei einem Schüttelherd zunutze.

Insbesondere ist entweder der asbestfreie mineralische Teil eine beim Nasssortieren erhaltene Schwerfraktion und der asbesthaltige Teil eine beim Nasssortieren erhaltene Leichtfraktion, wenn die Dichte der mineralischen Bestandteile der Feinfraktion höher ist als die Dichte der asbesthaltigen Bestandteile der Feinfraktion, oder ist der asbesthaltige Teil eine beim Nasssortieren erhaltene Schwerfraktion und der asbestfreie mineralische Teil eine beim Nasssortieren erhaltene Leichtfraktion, wenn die Dichte der asbesthaltigen Bestandteile der Feinfraktion höher ist als die Dichte der mineralischen Bestandteile der Feinfraktion.

Grundsätzlich hat Asbest bzw. das Asbestmineral (z.B. Krokydolith ca. 3,2-3,4 g/cm³) eine höhere Dichte als mineralische Bodensubstanzen (ca. 2,6-2,8 g/cm³) oder mineralischer Bauschutt, der z.B. überwiegend Beton (ca. 2,4 g/cm³) enthält.. Asbestzement hingegen hat aufgrund von Zuschlagsstoffen, die eine geringe Dichte aufweisen, eine insgesamt geringere Dichte als mineralische Bodensubstanzen oder Beton. Im Ergebnis verhält es sich bei asbesthaltigen Böden (aus z.B. mineralischen Bodensubstanzen und Asbestzement) so, dass die asbesthaltige Fraktion weniger absinkt (Leichtfraktion) als die asbestfreie mineralische Fraktion (Schwerfraktion). Bei anderen Mischungen aus Asbest, Zement und Zuschlagstoff kann sich das Dichteverhältnis Asbestzement zu Boden umkehren, so dass mineralische Bodensubstanzen die Leichtfraktion und der Asbestzement die Schwerfraktion darstellt.

Es ist zudem von Vorteil, wenn die mehreren sich überlagernden Strömungen eine Hauptströmung und eine dazu querausgerichtete Nebenströmung umfassen, so dass der asbestfreie mineralische Teil einer der beiden Strömungen folgt und der asbesthaltige Teil der anderen der beiden Strömungen folgt. Eine Überlagerung unterschiedlich ausgerichteter Strömungen tritt z.B. in einem Wendelscheider oder einem Hydrozyklon auf.

Vorzugsweise bilden die mehreren sich überlagernden Strömungen eine homogene Strömung, so dass der asbestfreie mineralische Teil oder der asbesthaltige Teil der homogenen Strömung folgt. Eine Überlagerung von Strömungen zu einer homogenen Gesamtströmung wird z.B. in einem Aufstromsortierer erzeugt.

Bevorzugt enthält die Flüssigkeit - in die die Bestandteile des Schüttguts mit kleiner Korngröße gegeben wird - Wasser. Die Flüssigkeit kann aber auch nur Wasser oder Wasser mit Tensiden sein. Die Zugabe von Tensiden hat jedoch den Vorteil, dass sie die Oberflächenspannung von Wasser herabsetzen und somit die Dichtetrennung von Material im Wasser begünstigt.

Es ist zweckmäßig, wenn beim Schritt des Trocken- oder Nassklassierens des Schüttguts, aus diesem zusätzlich eine Mittelfraktion abgetrennt wird. Die Korngröße der Mittelfraktion ist größer als die der Feinfraktion. Vorzugsweise weist die Mittelfraktion eine Korngröße von bis zu 32 mm, bevorzugt von bis zu 8 mm, auf. Besonders bevorzugt liegt die Korngröße zwischen 2 mm und 8 mm.

Der vorgenannte Verfahrensschritt des Trocken- oder Nassklassierens des Schüttguts kann mit dem folgenden Schritt ergänzt werden: - Nasssortieren der Mittelfraktion, um daraus mindestens asbesthaltigen Schlamm abzutrennen. Dabei umfasst der Schritt des Nasssortierens der Mittelfraktion, dass die Mittelfraktion in eine strömende Flüssigkeit gegeben wird, um mineralische und asbesthaltige Bestandteile der Mittelfraktion der Dichte nach zu trennen, und so den asbesthaltigen Schlamm zu erhalten. Der asbesthaltige Schlamm weist typischerweise eine Korngröße von < 2 mm auf und entsteht beispielsweise als Nebenprodukt beim Brechen von Beton bzw. Bauschutt oder liegt im Fall von Böden natürlich in dieser Korngröße vor. Er ist eine Restanhaftung an der Mittelfraktion, welche beim Klassieren nicht erfasst wurde.

Bei der der strömenden Flüssigkeit handelt es sich vorzugweise um eine aufwärtsströmende Flüssigkeit.

Analog zum Nasssortieren der Feinfraktion erfolgt das Nasssortieren der Mittelfraktion in einer Flüssigkeit, um eine Dichtetrennung der Bestandteile der Mittelfraktion zu erzielen. Das Nasssortieren der Mittelfraktion ist jedoch an ihre Korngröße angepasst. Da die Korngröße der Mittelfraktion über der Korngröße der Feinfraktion liegt, ist für die weitere Fraktionierung eine einfache Flüssigkeitsströmung ausreichend, um den asbesthaltigen Schlamm zu erhalten. Der asbesthaltige Schlamm setzt sich am Boden ab und folgt somit nicht der Strömung (z.B. eine Aufwärtsströmung). Zusätzlich kann aus der Mittelfraktion eine Schwerfraktion und eine Leichtfraktion gewonnen werden. Insbesondere haben die Bestandteile des Schüttgutes mit mittlerer Korngröße (Mittelfraktion) - bedingt durch die unterschiedlichen Dichten der Bestandteile - individuelle Absinkgeschwindigkeiten in der strömenden Flüssigkeit und nehmen so individuelle Bewegungsbahnen ein, was eine räumliche Trennung der Bestandteile ermöglicht. Durch geeignete Wahl der Flüssigkeit, in der Regel Wasser, kann zusätzlich erreicht werden, dass bestimmte Bestandteile der Mittelfraktion aufschwimmen und andere aufgrund ihrer höheren Dichte absinken. Dies erleichtert die räumliche Trennung der Bestandteile unterschiedlicher Dichte noch zusätzlich. Das Ergebnis ist eine Fraktionierung in eine asbestfreie mineralische Fraktion, eine asbesthaltige (mineralische) Fraktion und einen sedimentierten (asbesthaltigen) Schlamm. Je nach Zusammensetzung der Mittelfraktion stellt die asbestfreie mineralische Fraktion die Leichtfraktion und die asbesthaltige Fraktion die Schwerfraktion dar oder umgekehrt.

Bevorzugt umfasst ein weiterer Verfahrensschritt ein: - Nasssortieren des asbesthaltigen Schlamms, um diesen in einen asbestfreien mineralischen Teil und einen asbesthaltigen Teil zu trennen, wobei der Schritt des Nasssortierens des asbesthaltigen Schlamms umfasst, dass der asbesthaltige Schlamm in eine Flüssigkeit gegeben wird, in der mehrere sich überlagernde Strömungen erzeugt werden, oder der asbesthaltige Schlamm mit mindestens einem Flüssigkeitsstrom beaufschlagt und zusätzlich durch eine von außen auf den asbesthaltigen Schlamm wirkende Kraft beschleunigt wird, um mineralische und asbesthaltige Bestandteile des asbesthaltigen Schlamms der Dichte nach zu trennen, und so den asbestfreien mineralischen Teil und den asbesthaltigen Teil aus dem asbesthaltigen Schlamm zu erhalten. Besonders bevorzugt wird beim Schritt des Nasssortierens der Feinfraktion diese zusammen mit dem asbesthaltigen Schlamm nasssortiert, um die Feinfraktion und den asbesthaltigen Schlamm in einen asbestfreien mineralischen Teil und einen asbesthaltigen Teil zu trennen. Auf diese Weise können die Bestandteile von asbesthaltigem Schüttgut sehr effizient fraktioniert und die Ausbeute von asbesthaltigem Material auf der einen Seite und von asbestfreiem mineralischen Material auf der anderen Seite erhöht werden.

Es ist ferner zweckmäßig, wenn beim Schritt des Trocken- oder Nassklassierens des Schüttguts, aus diesem zusätzlich eine Grobfraktion abgetrennt wird. Die Korngröße der Grobfraktion ist größer als die der Mittel- und Feinfraktion. Sie liegt bevorzugt unter 800 mm, besonders bevorzugt unter 400 mm. Insbesondere liegt die Korngröße der Grobfraktion unter 400 mm und über 32 mm.

Der vorgenannte Schritt des Trocken- oder Nassklassierens des Schüttguts kann mit einer Rückführungsschleife ergänzt werden, d.h. in einem weiteren Schritt kommt es vorzugsweise zum Aufbrechen der Grobfraktion, um die in der Grobfraktion enthaltenen mineralischen und asbesthaltigen Bestandteile zu zerteilen. Konkret wird die erhaltene Grobfraktion also z.B. in einen Prallmühlenbrecher zurückgeführt und so in kleinere Bruchstücke gebrochen. Die Abtrennung einer Grobfraktion ist dann sinnvoll, wenn eine bestimmte maximale Korngröße im Schüttgut überschritten wird. Denn ein Teil des Schüttguts ist aufgrund seiner (zu großen) Korngröße als Sanierungskorn und damit für einen Sortierprozess ungeeignet. Es ist daher sinnvoll, die abgetrennte Grobfraktion zunächst weiter zu zerkleinern, um eine Sortierung nach Korngrößen problemlos durchführen zu können.

Vorzugweise umfasst ein weiterer Verfahrensschritt ein: - Trocken- oder Nassklassieren der aufgebrochenen Grobfraktion, um daraus mindestens eine Feinfraktion abzutrennen.

Bevorzugt umfasst ein weiterer Verfahrensschritt ein: - Nasssortieren der Feinfraktion, die aus der aufgebrochenen Grobfraktion abgetrennt wurde, um diese Feinfraktion in einen asbestfreien mineralischen Teil und einen asbesthaltigen Teil zu trennen, wobei der Schritt des Nasssortierens der Feinfraktion, die aus der aufgebrochenen Grobfraktion abgetrennt wurde, umfasst, dass diese Feinfraktion in eine Flüssigkeit gegeben wird, in der mehrere sich überlagernde Strömungen erzeugt werden oder diese Feinfraktion mit wenigstens einem Flüssigkeitsstrom beaufschlagt und zusätzlich durch eine von außen auf diese Feinfraktion wirkende Kraft beschleunigt wird, um mineralische und asbesthaltige Bestandteile dieser Feinfraktion der Dichte nach zu trennen, und so den asbestfreien mineralischen Teil und den asbesthaltigen Teil aus dieser Feinfraktion zu erhalten. Besonders bevorzugt wird die aufgebrochene Grobfraktion zusammen mit weiterem Schüttgut, das mineralische und asbesthaltige Bestandteile enthält, trocken- oder nassklassiert, um aus der aufgebrochenen Grobfraktion und dem weiteren Schüttgut mindestens eine Feinfraktion abzutrennen. Damit wird auch eine sehr effiziente Fraktionierung von asbesthaltigen Schüttgütern nach Korngrößen ermöglicht und die Ausbeute bei der Trennung von asbesthaltigem und asbestfreiem Material weiter erhöht.

Aus dem Trocken- oder Nassklassieren der aufgebrochenen Grobfraktion kann zusätzlich eine weitere Mittel- und Feinfraktion abgetrennt werden. Die aus der aufgebrochenen Grobfraktion gewonnenen Mittel- und Feinfraktion können entsprechend den vorgenannten Verfahrensschritten (Nasssortieren der Feinfraktion und Nasssortieren der Mittelfraktion) nach der Dichte ihrer Bestandteile getrennt werden.

Vorzugweise wird das abgetrennte asbesthaltige Material der Mittelfraktion und der Feinfraktion hydraulisch gebunden. Unter dem hydraulischen Binden wird die Immobilisierung der Asbestfasern unter Zugabe eines hydraulischen Bindemittels (z.B. eine Zementsuspension), das in der Flüssigkeit/im Wasser erhärtet und so den Asbest bindet. Im gebundenen Zustand ist die Möglichkeit der Freisetzung von Asbestfasern weitgehend ausgeschlossen. Das gebundene Material ist dann entsprechend verpackt auf einer Deponie zu beseitigen.

Das jeweils asbestfreie mineralische Material, welches aus dem beschriebenen Verfahren gewonnen wird, kann dem Stoffkreislauf wieder zugeführt werden.

Ein weiterer Aspekt der Erfindung betrifft ein System zur Aufbereitung eines Schüttguts, das mineralische und asbesthaltige Bestandteile enthält. Das System umfasst:
- ein Klassiergerät, das dazu ausgebildet ist, das Schüttgut trocken oder nass zu klassieren, um daraus mindestens eine Feinfraktion abzutrennen;
- ein dem Klassiergerät nachgeschaltetes Sortiergerät, das dazu ausgebildet ist, die Feinfraktion in einen asbestfreien mineralischen Teil und einen asbesthaltigen Teil zu trennen, wobei das Sortiergerät das Folgende umfasst:
- einen Trennbereich zur Aufnahme einer Flüssigkeit, in die die Feinfraktion zuführbar ist; und
- eine Strömungsmaschine zur Erzeugung einer strömenden Flüssigkeit,
wobei der Trennbereich und die Strömungsmaschine derart ausgebildet sind, mehrere sich überlagernde Strömungen zu erzeugen,
um mineralische und asbesthaltige Bestandteile der Feinfraktion der Dichte nach zu trennen, und so den asbestfreien mineralischen Teil und den asbesthaltigen Teil aus der Feinfraktion zu erhalten.

Ein noch weiterer Aspekt der Erfindung betrifft ein System zur Aufbereitung eines Schüttguts, das mineralische und asbesthaltige Bestandteile enthält. Das System umfasst:
- ein Klassiergerät, das dazu ausgebildet ist, das Schüttgut trocken oder nass zu klassieren, um daraus mindestens eine Feinfraktion abzutrennen;
- ein dem Klassiergerät nachgeschaltetes Sortiergerät, das dazu ausgebildet ist, die Feinfraktion in einen asbestfreien mineralischen Teil und einen asbesthaltigen Teil zu trennen, wobei das Sortiergerät das Folgende umfasst:
- einen Trennbereich zur Aufnahme einer Flüssigkeit, in die die Feinfraktion zuführbar ist;
- eine Strömungsmaschine zur Erzeugung einer strömenden Flüssigkeit; und
- einen Rüttelantrieb zur Beschleunigung der Feinfraktion im Trennbereich,
wobei der Trennbereich, die Strömungsmaschine und der Rüttelantrieb derart ausgebildet sind, die Feinfraktion mit mindestens einem Flüssigkeitsstrom zu beaufschlagen und zusätzlich durch eine von außen auf die Feinfraktion wirkende Kraft zu beschleunigen,
um mineralische und asbesthaltige Bestandteile der Feinfraktion der Dichte nach zu trennen, und so den asbestfreien mineralischen Teil und den asbesthaltigen Teil aus der Feinfraktion zu erhalten.

Bei dem Klassiergerät handelt es sich bevorzugt um eine (mobile) Siebmaschine (bzw. einen (mobilen) Siebturm). Die Siebmaschine kann mehrere Siebdecks mit je einem Siebgewebe (oder einer Lochplatte) und einer vorbestimmten Maschenweite (oder Lochgröße) haben, um die gewünschten Fraktionen zu trennen. Neben der Feinfraktion kann das Klassiergerät bevorzugt zusätzlich eine Mittelfraktion und besonders bevorzugt eine Großfraktion aus dem Schüttgut abtrennen.

Das Sortiergerät ist bevorzugt ein Wendelscheider, ein Schüttelherd, ein Hydrozyklon, oder ein Aufstromsortierer.

Der Wendelscheider nutzt die Schwerkraft und die daraus resultierenden Zentrifugalkräfte zur Dichtetrennung von Stoffen. Die entstehende Trübe (aus Schüttgut und z.B. Wasser) fließt in einer spiralförmigen Rinne (Wendelrinne) nach unten. In der Rinne können drei Strömungen unterschieden werden: eine Hauptströmung, die dem Wendelverlauf folgt, sowie eine Querströmung, die an der Trübeoberfläche nach außen und am Rinnenboden nach innen gerichtet ist. Die Schwerfraktion sammelt sich somit an der radial inneren Innenseite der Rinne - und damit im Bereich der Wendelscheiderachse - an, die Leichtfraktion an der radial äußeren Innenseite. Durch Strömungsumkehr ist jedoch auch eine umgekehrte Verteilung von Leicht- und Schwerfraktion möglich. Der Wendelscheider ist typischerweise für die Dichtetrennung von Material mit einer Korngröße von ca. 0,6 bis 2 mm vorgesehen.

Der Schüttelherd weist in der Regel eine geneigte Schüttelherdplatte auf und ist seitlich mit einem Rüttelantrieb versehen. Auf der Schüttelherdplatte strömt eine Flüssigkeit entsprechend der Neigung der Platte, wodurch sich eine Hauptströmung bildet. Wird nun Schüttgut auf die Platte gegeben, so folgt es dieser Hauptströmung. Der Rüttelantrieb bewirkt eine schnelle Änderung der Bewegungsrichtung der Platte z.B. quer zur Hauptströmungsrichtung. Die dabei auf das Schüttgut wirkenden äußeren Kräfte trennen die Bestandteile höherer Dichte (Schwerfraktion) bedingt durch ihre Massenträgheit von den der Hauptströmung folgenden Bestandteilen niedrigerer Dichte. Insbesondere entsteht durch die quer zur Hauptströmungsrichtung wirkenden Kräfte eine resultierende Kraftrichtung, entlang derer sich die Schwerfraktion bewegt. Die Schwerfraktion fällt schließlich seitlich von der Schüttelherdplatte ab, während die Leichtfraktion der Hauptströmung bis zum Ende folgt und so an anderer Stelle (z.B. in Längsrichtung) der Platte abfällt. Mit dem Schüttelherd lässt sich typischerweise Material mit einer Korngröße von 0,6 bis 2 mm trennen.

Der Hydrozyklon umfasst ein oberes zylindrisches Segment mit einer Oberlaufdüse, einem tangentialen Zulauf und einem unteren konischen Segment mit einer Unterlaufdüse. Er nutzt die Zentrifugalkräfte, die durch den tangentialen Zulauf eines Schüttgut-Wasser-Gemisches entstehen, um die schweren Bestandteile des Schüttgutes aufgrund ihrer höheren Dichte von den leichten Bestandteilen zu trennen. Durch den tangentialen Eintritt in das zylindrische Segment wird das Gemisch auf eine Kreisbahn gezwungen und bewegt sich in einem abwärts gerichteten Wirbel nach unten. Durch die Verjüngung im konischen Segment kommt es zu einer Verdrängung von Volumen nach innen und zu einem Aufstau im unteren Bereich des Konus, wodurch sich ein innerer, aufwärts gerichteter Wirbel bildet. Die schweren Bestandteile werden nach außen gedrückt und nach unten in das konische Segment und über den Unterlauf in einen Sammelbehälter abgeleitet, während die leichten Bestandteile in die Mitte wandern und nach oben über den Oberlauf austreten.

Als Sortiergerät kann auch ein Aufstromsortierer eingesetzt werden. Der Aufstromsortierer erzeugt eine homogene Gesamtströmung aus mehreren überlagerten Einzelströmungen. Die homogene Gesamtströmung wird durch eine Platte mit gleichmäßig verteilten Düsen erreicht, so dass oberhalb der Platte eine gleichmäßige Verteilung der Aufwärtsströmung und damit ein homogenes Wirbelbett entsteht. In diesem Wirbelbett wird die Leichtfraktion als Schwimmstoff im Überlauf abgeschieden. Die Schwerfraktion wird im Unterlauf abgezogen. Mit dem Aufstromsortierer kann Material mit einer Korngröße von 1 bis 3 mm fraktioniert werden.

Das System kann zusätzlich ein zweites Sortiergerät umfassen, das derart ausgebildet ist, die (optionale) Mittelfraktion mithilfe eines Nassstroms zu sortieren, um aus der Mittelfraktion mindestens asbesthaltigen Schlamm abzutrennen. Ferner wird bevorzugt aus der Mittelfraktion eine Leichtfraktion und eine Schwerfraktion abgetrennt. Das zweite Sortiergerät weist vorzugweise eine Trennkammer auf, die Mittel zum Bereitstellen des Nassstroms (z.B. eine Strömungsmaschine) umfasst, in den die Mittelfraktion zuführbar ist, um mineralische und asbesthaltige Bestandteile der Mittelfraktion der Dichte nach zu trennen und so den asbesthaltigen Schlamm sowie (optional) die Leichtfraktion und die Schwerfraktion zu erhalten. Der Nassstrom ist z.B. eine in Wasser (oder in anderen Flüssigkeiten) ausgebildete Aufwärtsströmung, in der sich Leicht- und Schwerstoffe sowie asbesthaltiger Schlamm voneinander trennen. Die Aufwärtsströmung wird beispielsweise mit einem Propeller in der gefüllten Trennkammer erzeugt. In der Trennkammer befindliche Leichtstoffe können so an die Oberfläche des Wassers transportiert werden, während Schwerstoffe absinken. Somit lässt sich eine Trennung in eine Leichtfraktion aus Leichtstoffen und eine Schwerfraktion aus Schwerstoffen erzielen. Je nach Zusammensetzung der Mittelfraktion (Zuschlagsstoffe, Asbestanteil) wird der asbesthaltige Bestandteil der Mittelfraktion als Leicht- oder Schwerfraktion abgetrennt.

Der asbesthaltige Schlamm kann von dem oben zuerst genannten Sortiergerät weiter nasssortiert werden, um den asbesthaltigen Schlamm in einen asbestfreien mineralischen Teil und einen asbesthaltigen Teil zu trennen. Vorzugsweise erfolgt das Nasssortieren des asbesthaltigen Schlamms zusammen mit der Feinfraktion.

Das System kann zusätzlich ein Brechgerät umfassen, das dazu ausgebildet ist, die von dem Klassiergerät gewonnene Grobfraktion aufzubrechen, um die in der Grobfraktion enthaltenen mineralischen und asbesthaltigen Bestandteile zu zerteilen. Als Brechgerät ist vorzugweise ein (mobiler) Prallmühlenbrecher vorgesehen. Allgemein sind jedoch auch andere Brechgeräte geeignet, die Material größerer Körnung zuverlässig auf eine gewünschte Korngröße reduzieren können.

Die aufgebrochene Grobfraktion kann dem Klassiergerät zugeführt werden, um aus der aufgebrochenen Grobfraktion wie oben beschrieben mindestens eine Feinfraktion abzutrennen.

Vorteile des erfindungsgemäßen Systems und seiner Ausführungsformen sowie weitere vorteilhafte Ausführungsformen ergeben sich entsprechend aus dem oben beschriebenen erfindungsgemäßen Verfahren.

Mit der erfindungsgemäßen Lösung ist es erstmals möglich, asbesthaltige und nicht-asbesthaltige Bestandteile aus kontaminierten Böden und/oder Bauschutt, insbesondere am Ort der Abrissstelle, zu trennen. So lassen sich wertvolle mineralische Materialien zurückgewinnen und asbesthaltige Bauabfälle erheblich reduzieren. Darüber hinaus kann durch kürzere Transportwege und Materialrückgewinnung CO₂ eingespart und durch die Reduzierung von deponiepflichtigen Abfällen der verfügbare Deponieraum entlastet werden.

Im Folgenden werden bevorzugte Ausführungsbeispiele der vorliegenden Erfindung anhand der nachfolgenden Figuren beschrieben. Es zeigen:
Fig. 1 ein Flussdiagramm, das ein Verfahren gemäß einer Ausführungsform der vorliegenden Erfindung veranschaulicht und
Fig. 2 eine schematische Darstellung einer Ausführungsform des erfindungsgemäßen Systems.

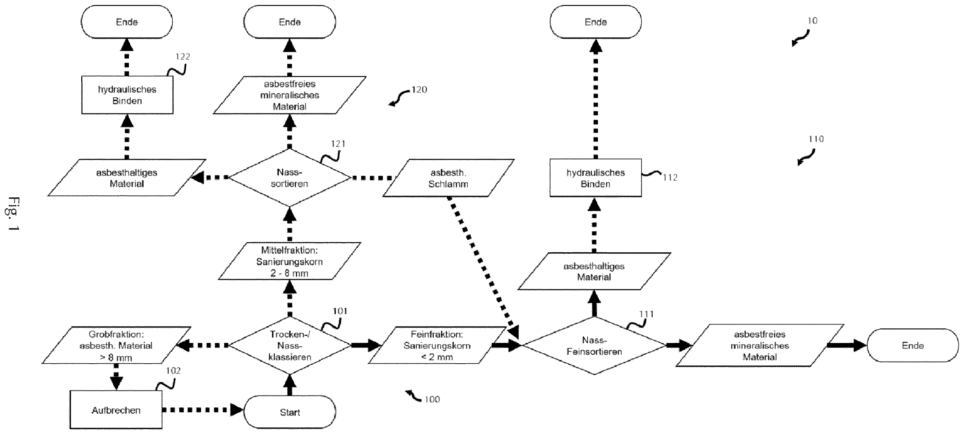

Fig.1 zeigt ein Flussdiagramm, das ein Verfahren 10 gemäß einer Ausführungsform der vorliegenden Erfindung veranschaulicht. Die gezeigten Verfahrensschritte sind lediglich beispielhaft in drei sogenannte "Sanierungsabschnitte" 100-120 unterteilt. Sanierungsabschnitte sind dadurch gekennzeichnet, dass in jedem Abschnitt das zugeführte Material in mehrere Fraktionen klassiert/sortiert wird. Sie unterliegen außerdem unterschiedlichen Sicherheitsbestimmungen. In Sanierungsabschnitten, in denen asbesthaltiges Material trocken transportiert und weiterverarbeitet wird, kann man Wasserkanonen einsetzen oder den betroffenen Arbeitsbereich abschirmen (sog. Schwarzbereich), wobei ein Unterdruck gegenüber der Umgebung (bei Verwendung entsprechender Luftfilter) dauerhaft aufrechterhalten wird, um die Ausbreitung von Asbestfasern zu verhindern. Sanierungsabschnitte, bei denen asbesthaltige Bestandteile in Flüssigkeiten gebunden sind, erfordern hingegen weniger strenge Sicherheitsvorkehrungen. Die mit einem gestrichelten Pfeil dargestellten Fließlinien stellen optionale Verfahrensschritte dar. Die konkreten Arbeits- und Umgebungsschutzmaßnahmen richten sich nach den jeweiligen Umweltauflagen.

In einem ersten Sanierungsabschnitt 100 wird asbesthaltiges Schüttgut, das ausgehobenen Boden und/oder Bauschutt enthält, trocken- bzw. durch Zugabe von z.B. Wasser nassklassiert 101, um diese in bis zu drei Fraktionen zu trennen. Für das Klassieren ist typischerweise eine entsprechende Trocken- oder Nasssiebtechnik - oder ein anderes geeignetes Sortiergerät - zu verwenden. Das Trocken- oder Nassklassieren des Schüttguts 101 trennt zumindest die asbesthaltigen mineralischen Bestandteile mit geringer Korngröße (Feinfraktion) aus dem aufgegebenen Schüttgut ab. Bei der Feinfraktion kann es sich um feine asbesthaltige Erde, asbesthaltigen Staub und Betonsand handeln. Bevorzugt werden ebenfalls die Bestandteile mit mittlerer Korngröße (Mittelfraktion) und mit großer Korngröße (Grobfraktion) getrennt. Die Korngröße der Feinfraktion liegt bevorzugt bei weniger als 2 mm, die Korngröße der Mittelfraktion bei maximal 8 mm und die Korngröße der Grobfraktion bei weniger als 32 mm. Die Grobfraktion ist für weitere Sanierungsschritte und damit für eine Dichtetrennung schlecht geeignet, sodass sie zunächst aufgebrochen 102 wird, um die mineralischen und asbesthaltigen Bestandteile der Grobfraktion zu zerteilen, d.h. die Korngröße dieser Bestandteile wird auf einen gewünschten Wert reduziert. Für das Aufbrechen der Grobfraktion 102 ist vorzugweise ein Prallmühlenbrecher vorgesehen; es sind aber auch andere Brechgeräte dafür geeignet. Die aufgebrochene Grobfraktion kann dann isoliert oder zusammen mit neuem Schüttgut trocken- oder nassklassiert werden. Nach dem Aufbrechen erfolgt insbesondere die Rückführung des gebrochenen Materials in die Trocken- oder Nasssiebtechnik zur weiteren Verarbeitung. Sollten grobe Bestandteile mit einer Korngröße von z.B. größer als 8 mm nach dem Schritt des Aufbrechens der Grobfraktion erhalten bleiben, ist es von Vorteil, wenn sie beim Klassieren erneut abgetrennt und zurückgeführt werden. Dieser Rückführungsvorgang wird so oft wiederholt, bis das aufgebrochene Material eine Korngröße erreicht, die unterhalb der vorbestimmten Korngröße (z.B. kleiner gleich 8 mm) liegt.

In einem zweiten Sanierungsabschnitt 110 wird die im ersten Sanierungsabschnitt 100 gewonnene Feinfraktion nasssortiert 111, um diese in zwei weitere Fraktionen der Dichte nach zu trennen. Die zwei weiteren Fraktionen aus der Feinfraktion sind Bestandteile mit hoher Dichte, sogenannte Schwerstoffe, (Schwerfraktion) und Bestandteile mit geringer Dichte, sogenannte Leichtstoffe, (Leichtfraktion). Je nach Zusammensetzung des asbesthaltigen Schüttgutes reichert sich der Asbest in der Leicht- oder Schwerfraktion und das asbestfreie mineralische Material entsprechend in der Schwer- bzw. Leichtfraktion an. Der Schritt des Nasssortierens der Feinfraktion 111 umfasst, dass die Feinfraktion in eine Flüssigkeit gegeben wird, in der mehrere sich überlagernde Strömungen erzeugt werden. Die Verwendung mehrerer Strömungen ermöglicht erst die Dichtetrennung der Bestandteile mit geringer Korngröße. So können die Bestandteile in Abhängigkeit ihrer Dichte bestimmten Strömungen folgen. Schwere Bestandteile folgen z.B. einer Hauptströmung und leichte Bestandteile einer z.B. quer zur Hauptströmung ausgerichteten Nebenströmung. Es sind aber auch andere Strömungskonfigurationen denkbar, die für die räumliche Trennung von leichten Bestandteilen und schweren Bestandteilen geeignet ist. Alternativ wird die Feinfraktion mit einem Flüssigkeitsstrom beaufschlagt und zusätzlich durch eine von außen auf die Feinfraktion wirkende Kraft beschleunigt. Bestandteile mit geringer Dichte folgen insbesondere der Strömungsrichtung, während Bestandteile mit hoher Dichte bevorzugt der Richtung der einwirkenden Kraft folgen. Das einfache Schwimm-/Sink-Verfahren (ohne Strömung) oder das Hub-Senk-Verfahren (mit pulsierender Aufwärtsströmung) sind hingegen für das Sortieren der Feinfraktion aufgrund der geringen Korngröße nicht geeignet. Bevorzugt wird für diesen Zweck eine entsprechende Nasstrenntechnik verwendet. Für welche Ausgestaltung des Nasssortierens man sich schlussendlich entscheidet, hängt von vielen Faktoren ab, wie die Verarbeitungsmenge, räumliche Vorgaben, die Lieferzeit der technischen Anlagen, dem Fasergehalt im asbesthaltigen Boden und die Wirtschaftlichkeit.

Die asbesthaltige Fraktion (Leicht- oder Schwerfraktion) gelangt z.B. über ein Förderband in einen Bereich und wird hydraulisch gebunden 112. Die asbesthaltige Fraktion muss gemäß Behördenvorgabe verpackt und (z.B. auf einer entsprechenden Deponie) beseitigt werden. Die asbestfreie Fraktion ist aus asbestfreiem mineralischem Material, welches dem Stoffkreislauf zugeführt werden kann.

In einem dritten Sanierungsabschnitt 120 wird die im ersten Sanierungsabschnitt 100 gewonnene Mittelfraktion nasssortiert 121, um diese in bis zu drei weiteren Fraktionen der Dichte nach zu trennen. Die drei weiteren Fraktionen aus der Mittelfraktion sind Bestandteile mit hoher Dichte (Schwerfraktion) und Bestandteile mit geringer Dichte (Leichtfraktion) sowie sedimentierter Schlamm. Wie zuvor erwähnt, reichert sich der Asbest je nach Zusammensetzung des aufgegebenen asbesthaltigen Schüttguts in der Leicht- oder Schwerfraktion und asbestfreies mineralisches Material entsprechend in der Schwer- bzw. Leichtfraktion an. Bevorzugt wird für diesen Zweck eine Nasstrenntechnik, die auf Basis eines Aufstromverfahrens oder mithilfe von Hub- und Senktechnik funktioniert. Eine auf der Hub Senk-Technik basierende Vorrichtung verfügt über eine sich auf- und abbewegende Platte. Die Platte löst bei jeder Bewegung einen Strömungsimpuls auf das darüber liegende Wasser und das sich darin befindende Setzbett mit dem zu trennenden Material aus. Bei jedem Strömungsimpuls werden die Materialien des Setzbettes in einer senkrechten Bewegung von unten nach oben befördert. Die Amplitude der senkrechten Bewegungskurve hängt hierbei von der Dichte des Materials ab, sodass die Leichtstoffe über einen separaten oberen Auslass abgeführt werden.

Der gewonnene asbesthaltige Teil (Leicht- oder Schwerfraktion) der Mittelfraktion wird hydraulisch gebunden 122. Im gebundenen Zustand kann das Material auf einer Deponie eingelagert werden. Dagegen steht der asbestfreie mineralische Anteil der Mittelfraktion dem Stoffkreislauf wieder zur Verfügung. Der sedimentierte Schlamm kann hydraulisch gebunden (in Fig. 1 nicht gezeigt) oder alternativ dem zweiten Sanierungsabschnitt 110 zugeführt werden.

Die Schritte des dritten Sanierungsabschnitts 120 sind rein optional.

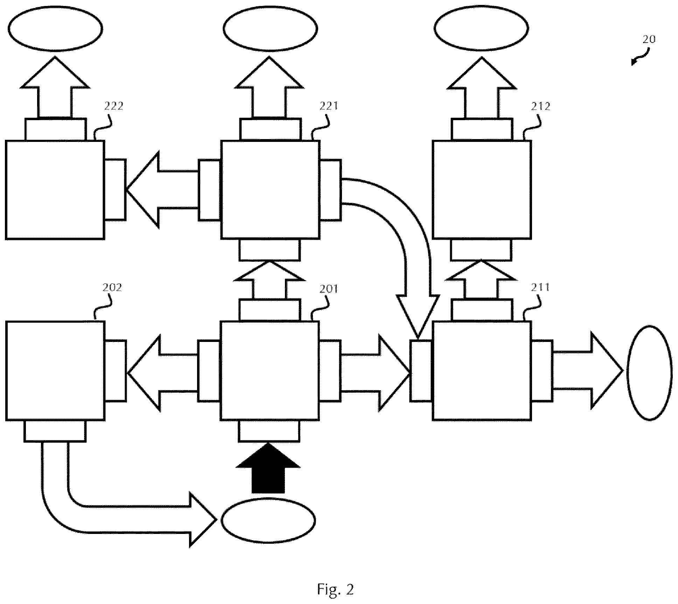

Fig. 2 zeigt eine Ausführungsform des erfindungsgemäßen Systems 20 und ist so ausgebildet, dass es das Verfahren gemäß Fig. 1 ausführen kann.

Das System 20 weist ein Klassiergerät 201 zum Trocken- oder Nasssortieren von Schüttgut auf. Hierfür ist das Klassiergerät 201 so ausgebildet, dass es eine Feinfraktion (Material mit kleiner Korngröße, wie asbesthaltiger Staub, Betonsand oder feine asbesthaltige Erde) und optional eine Mittel- und Grobfraktion (Material mit mittlerer und großer Korngröße) aus dem Schüttgut abtrennen kann. Das Schüttgut wird beispielsweise mit einem Bagger oder mithilfe eines Förderbands dem Klassiergerät 201 zugeführt. Bei dem Klassiergerät handelt es sich um Trocken-/Nasssiebtechnik, wie eine Siebmaschine. Die erhaltenen Fraktionen stehen dann beispielsweise in entsprechenden Ausgaben des Klassiergeräts zur Verfügung; entsprechendes gilt für die nachfolgend vorgestellten Geräte.

Dem Klassiergerät ist ein (erstes) Sortiergerät 211 nachgeschaltet, das dazu ausgebildet ist, die gewonnene Feinfraktion gemäß der Dichte ihrer Bestandteile in einen asbestfreien mineralischen Teil und einen asbesthaltigen Teil zu trennen. In Abhängigkeit der Zusammensetzung der Feinfraktion stellt der asbestfreie mineralische Teil die Leichtfraktion und der asbesthaltige Teil die Schwerfraktion oder umgekehrt dar. Bei dem Sortiergerät 211 handelt sich vorzugweise um einen Wendelscheider, einen Schüttelherd, einen Hydrozyklon, oder einen Aufstromsortierer. Bei dem Wendelscheider und dem Hydrozyklon handelt es sich um Sortiergeräte, die eine Flüssigkeit mit mehreren sich überlagernden Strömungen bereitstellen können, worin sich die Feinfraktion der Dichte nach auftrennen lässt. Der Schüttelherd stellt einen Flüssigkeitsstrom bereit, mit dem die Feinfraktion beaufschlagt wird, und erzeugt eine von außen auf die Feinfraktion wirkende Kraft, insbesondere periodisch wirkende Kräfte, die die Feinfraktion beschleunigen. Je nach Dichte der Bestandteile folgen sie entweder dem Flüssigkeitsstrom oder der Richtung der wirkenden Kraft. Es kann zudem eine Station 212 zum hydraulischen Binden des asbesthaltigen Teils der Feinfraktion vorgesehen sein.

Sollte die von dem Klassiergerät 201 erhaltene Mittelfraktion weiter aufbreitet werden, kann das System 20 ferner ein zweites Sortiergerät 221 aufweisen. Dieses zweite Sortiergerät 221 ist dazu ausgebildet, die Mittelfraktion mithilfe eines Nassstroms zu sortieren, um aus der Mittelfraktion mindestens asbesthaltigen Schlamm und optional eine Leicht- und eine Schwerfraktion abzutrennen. Vorzugweise umfasst das zweite Sortiergerät 221 eine Trennkammer und eine Strömungsmaschine (z.B. ein Propeller), um eine Flüssigkeit mit einer Aufwärtsströmung (der Nassstrom) bereitzustellen. In dieser Flüssigkeit kann die gewünschte Dichtetrennung erfolgen. Lediglich beispielhaft ist die Leichtfraktion das asbestfreie mineralische Material und die Schwerfraktion das asbesthaltige Material. Das asbesthaltige Material kannan einer Station zum hydraulischen Binden 222 verfestigt werden. Der asbesthaltige Schlamm ist z.B. auch hydraulisch zu binden oder dem (ersten) Sortiergerät 211 zuzuführen.

Sollte die von dem Klassiergerät 201 erhaltene Grobfraktion weiter aufbereitet werden, kann das System 20 ferner ein Brechgerät 202 (z.B. einen Prallmühlenbrecher) aufweisen. Das Brechgerät 202 ist dazu ausgebildet, die Großfraktion aufzubrechen, so dass die mineralischen und asbesthaltigen Bestandteile zerteilt werden.

Es können Komponenten bzw. Geräte/Anlagen des Systems 20 teilweise ausgelassen, ersetzt oder hinzugefügt werden, die für die Aufbereitung von asbesthaltigem Schüttgut dienlich sind.

### Liste der Bezugszeichen:

- 10: Verfahren zur Aufbereitung von Schüttgut, das mineralische und asbesthaltige Bestandteile enthält;
- 100: Erster Sanierungsabschnitt;
- 101: Trocken- oder Nassklassieren des Schüttguts (in eine Fein-, Mittel-, und Grobfraktion);
- 102: Aufbrechen der Grobfraktion (z.B. durch einen Prallmühlenbrecher);
- 110: Zweiter Sanierungsabschnitt;
- 111: Nass(fein)sortieren der Feinfraktion (in eine Leicht- und Schwerfraktion: asbesth. Material und asbestf. mineralisches Material);
- 112: Hydraulisches Binden des asbesth. Materials der Feinfraktion;
- 120: Dritter Sanierungsabschnitt;
- 121: Nasssortieren der Mittelfraktion (in eine Leicht- und Schwerfraktion sowie sedimentierten Schlamm: asbesth. Material und asbestf. mineralisches Material und asbesth. Schlamm);
- 122: Hydraulisches Binden des asbesth. Materials der Mittelfraktion;
- 20: System zur Aufbereitung von Schüttgut, das mineralische und asbesthaltige Bestandteile enthält;
- 201: Trocken-/Nasssiebtechnik / Klassiergerät;
- 202: Brechgerät, z.B. Prallmühlenbrechers;
- 211: Nassdichtetrenner / (Fein-)Sortiergerät;
- 212: Station zum hydraulischen Binden;
- 221: Zweiter Nassdichtetrenner / (zweites) Sortiergerät;
- 222: Station zum hydraulischen Binden.

## Patentansprüche

1. Verfahren zur Aufbereitung eines Schüttguts, das mineralische und asbesthaltige Bestandteile enthält, wobei das Verfahren die folgenden Schritte aufweist:
- Trocken- oder Nassklassieren des Schüttguts, um daraus mindestens eine Feinfraktion abzutrennen;
- Nasssortieren der Feinfraktion, um diese in einen asbestfreien mineralischen Teil und einen asbesthaltigen Teil zu trennen,
wobei der Schritt des Nasssortierens der Feinfraktion umfasst, dass:
- die Feinfraktion in eine Flüssigkeit gegeben wird, in der mehrere sich überlagernde Strömungen erzeugt werden; oder
- die Feinfraktion mit mindestens einem Flüssigkeitsstrom beaufschlagt und zusätzlich durch eine von außen auf die Feinfraktion wirkende Kraft beschleunigt wird, um mineralische und asbesthaltige Bestandteile der Feinfraktion der Dichte nach zu trennen, und so den asbestfreien mineralischen Teil und den asbesthaltigen Teil aus der Feinfraktion zu erhalten.

2. Verfahren gemäß Anspruch 1, wobei entweder der asbestfreie mineralische Teil eine beim Nasssortieren erhaltene Schwerfraktion und der asbesthaltige Teil eine beim Nasssortieren erhaltene Leichtfraktion ist, wenn die Dichte der mineralischen Bestandteile der Feinfraktion höher ist als die Dichte der asbesthaltigen Bestandteile der Feinfraktion, oder
der asbesthaltige Teil eine beim Nasssortieren erhaltene Schwerfraktion und der asbestfreie mineralische Teil eine beim Nasssortieren erhaltene Leichtfraktion ist, wenn die Dichte der asbesthaltigen Bestandteile der Feinfraktion höher ist als die Dichte der mineralischen Bestandteile der Feinfraktion.

3. Verfahren gemäß einem der vorherigen Ansprüche, wobei die mehreren sich überlagernden Strömungen eine Hauptströmung und eine dazu querausgerichtete Nebenströmung umfassen, so dass der asbestfreie mineralische Teil einer der beiden Strömungen folgt und der asbesthaltige Teil der anderen der beiden Strömungen folgt.

4. Verfahren gemäß einem der Ansprüche 1 bis 3, wobei die mehreren sich überlagernden Strömungen eine homogene Strömung bilden, so dass der asbestfreie mineralische Teil oder der asbesthaltige Teil der homogenen Strömung folgt.

5. Verfahren gemäß einem der vorherigen Ansprüche, wobei die Flüssigkeit Wasser oder Wasser mit Tensiden ist.

6. Verfahren gemäß einem der vorherigen Ansprüche, wobei die Feinfraktion eine Korngröße von weniger als 5 mm, bevorzugt von weniger als 2 mm aufweist.

7. Verfahren gemäß einem der vorherigen Ansprüche, wobei beim Schritt des Trocken- oder Nassklassierens des Schüttguts, aus diesem zusätzlich eine Mittelfraktion abgetrennt wird, umfassend den weiteren Schritt:
- Nasssortieren der Mittelfraktion, um daraus mindestens asbesthaltigen Schlamm abzutrennen,
wobei der Schritt des Nasssortierens der Mittelfraktion umfasst, dass die Mittelfraktion in eine strömende Flüssigkeit gegeben wird, um mineralische und asbesthaltige Bestandteile der Mittelfraktion der Dichte nach zu trennen, und so den asbesthaltigen Schlamm zu erhalten.

8. Verfahren gemäß Anspruch 7, umfassend den weiteren Schritt:
- Nasssortieren des asbesthaltigen Schlamms, um diesen in einen asbestfreien mineralischen Teil und einen asbesthaltigen Teil zu trennen,
wobei der Schritt des Nasssortierens des asbesthaltigen Schlamms umfasst, dass der asbesthaltige Schlamm in eine Flüssigkeit gegeben wird, in der mehrere sich überlagernde Strömungen erzeugt werden, oder der asbesthaltige Schlamm mit mindestens einem Flüssigkeitsstrom beaufschlagt und zusätzlich durch eine von außen auf den asbesthaltigen Schlamm wirkende Kraft beschleunigt wird, um mineralische und asbesthaltige Bestandteile des asbesthaltigen Schlamms der Dichte nach zu trennen, und so den asbestfreien mineralischen Teil und den asbesthaltigen Teil aus dem asbesthaltigen Schlamm zu erhalten.

9. Verfahren gemäß einem der vorherigen Ansprüche, wobei die Mittelfraktion eine Korngröße von bis zu 32 mm, bevorzugt von bis zu 8 mm, besonders bevorzugt von 2 mm bis 8 mm, aufweist.

10. Verfahren gemäß einem der vorherigen Ansprüche, wobei beim Schritt des Trocken- oder Nassklassierens des Schüttguts, aus diesem zusätzlich eine Grobfraktion abgetrennt wird, umfassend den weiteren Schritt:
- Aufbrechen der Grobfraktion, um die in der Grobfraktion enthaltenen mineralischen und asbesthaltigen Bestandteile zu zerteilen.

11. Verfahren gemäß Anspruch 10, umfassend den weiteren Schritt:
- Trocken- oder Nassklassieren der aufgebrochenen Grobfraktion, um daraus mindestens eine Feinfraktion abzutrennen.

12. Verfahren gemäß Anspruch 11, umfassend den weiteren Schritt:
- Nasssortieren der Feinfraktion, die aus der aufgebrochenen Grobfraktion abgetrennt wurde, um diese Feinfraktion in einen asbestfreien mineralischen Teil und einen asbesthaltigen Teil zu trennen,
wobei der Schritt des Nasssortierens der Feinfraktion, die aus der aufgebrochenen Grobfraktion abgetrennt wurde, umfasst, dass diese Feinfraktion in eine Flüssigkeit gegeben wird, in der mehrere sich überlagernde Strömungen erzeugt werden oder diese Feinfraktion mit mindestens einem Flüssigkeitsstrom beaufschlagt und zusätzlich durch eine von außen auf diese Feinfraktion wirkende Kraft beschleunigt wird, um mineralische und asbesthaltige Bestandteile dieser Feinfraktion der Dichte nach zu trennen, und so den asbestfreien mineralischen Teil und den asbesthaltigen Teil aus dieser Feinfraktion zu erhalten.

13. Verfahren gemäß einem der vorherigen Ansprüche, wobei das Schüttgut in Bestandteilen vorliegt, die eine maximale Kantenlänge von 40 cm aufweisen.

14. System zur Aufbereitung eines Schüttguts, das mineralische und asbesthaltige Bestandteile enthält, umfassend:
- ein Klassiergerät, das dazu ausgebildet ist, das Schüttgut trocken oder nass zu klassieren, um daraus mindestens eine Feinfraktion abzutrennen;
- ein dem Klassiergerät nachgeschaltetes Sortiergerät, das dazu ausgebildet ist, die Feinfraktion in einen asbestfreien mineralischen Teil und einen asbesthaltigen Teil zu trennen, wobei das Sortiergerät das Folgende umfasst:
- einen Trennbereich zur Aufnahme einer Flüssigkeit, in die die Feinfraktion zuführbar ist; und
- eine Strömungsmaschine zur Erzeugung einer strömenden Flüssigkeit, wobei der Trennbereich und die Strömungsmaschine derart ausgebildet sind,
mehrere sich überlagernde Strömungen zu erzeugen,
um mineralische und asbesthaltige Bestandteile der Feinfraktion der Dichte nach zu trennen, und so den asbestfreien mineralischen Teil und den asbesthaltigen Teil aus der Feinfraktion zu erhalten.

15. System zur Aufbereitung eines Schüttguts, das mineralische und asbesthaltige Bestandteile enthält, umfassend:
- ein Klassiergerät, das dazu ausgebildet ist, das Schüttgut trocken oder nass zu klassieren, um daraus mindestens eine Feinfraktion abzutrennen;
- ein dem Klassiergerät nachgeschaltetes Sortiergerät, das dazu ausgebildet ist, die Feinfraktion in einen asbestfreien mineralischen Teil und einen asbesthaltigen Teil zu trennen, wobei das Sortiergerät das Folgende umfasst:
- einen Trennbereich zur Aufnahme einer Flüssigkeit, in die die Feinfraktion zuführbar ist;
- eine Strömungsmaschine zur Erzeugung einer strömenden Flüssigkeit; und
- einen Rüttelantrieb zur Beschleunigung der Feinfraktion im Trennbereich,
wobei der Trennbereich, die Strömungsmaschine und der Rüttelantrieb derart ausgebildet sind, die Feinfraktion mit mindestens einem Flüssigkeitsstrom zu beaufschlagen und zusätzlich durch eine von außen auf die Feinfraktion wirkende Kraft zu beschleunigen, um mineralische und asbesthaltige Bestandteile der Feinfraktion der Dichte nach zu trennen, und so den asbestfreien mineralischen Teil und den asbesthaltigen Teil aus der Feinfraktion zu erhalten.

16. System gemäß Anspruch 14 oder 15, wobei das Klassiergerät dazu ausgebildet ist, das Schüttgut trocken oder nass zu klassieren, um daraus zusätzlich eine Mittelfraktion und eine Grobfraktion abzutrennen, ferner umfassend:
- ein dem Klassiergerät nachgeschaltetes zweites Sortiergerät, das dazu ausgebildet ist, die Mittelfraktion mithilfe eines Nassstroms zu sortieren, um aus der Mittelfraktion mindestens asbesthaltigen Schlamm abzutrennen;
- ein dem Klassiergerät nachgeschaltetes Brechgerät, das dazu ausgebildet ist, die von dem Klassiergerät gewonnene Großfraktion aufzubrechen, um die in der Grobfraktion enthaltenen mineralischen und asbesthaltigen Bestandteile zu zerteilen.
